# EUROPEAN PATENT APPLICATION

(11) **EP 4 404 112 A1**
(43) Date of publication of application: **24.07.2024**
(21) Application number: 23152883.7
(22) Date of filing: 23.01.2023
(51) Int. Cl.: G06Q 10/00, G06Q 50/30

(54) **METHOD AND SYSTEM FOR VEHICLE DAMAGE DETECTION**

(71) Applicant: Robert Bosch GmbH, 70442 Stuttgart (DE)
(72) Inventor: Ferreira, Andre, 4705-820 Braga (PT); Silva, Pedro, 4705-820 Braga (PT); Cunha, Pedro, 4705-820 Braga (PT); Sa, Joao, 4705-820 Braga (PT); Goncalves, Carolina, 4705-820 Braga (PT); Silva, Tome, 4705-820 Braga (PT); Faria, Bruno, 4705-820 Braga (PT); Fernandes, Joao, 4705-820 Braga (PT); Pereira, Rita, 4705-820 Braga (PT); Silva, Ana Carolina, 4705-820 Braga (PT); Costa, Afonso, 4705-820 Braga (PT)

(57) **Abstract**

Computer-implemented method for detecting at least a transient event, wherein the transient event is a damage and/or a contact event to a vehicle, said method comprising: acquiring a sound signal over a period of time by an audio sensor mounted on the vehicle to capture air-borne sound waves; acquiring at least a vibration signal over a period of time by a motion sensor mounted on the vehicle to capture vehicle vibration; detecting if said acquired sound signal is above a predetermined sound threshold and/or acquired vibration signal is above a predetermined vibration threshold; converting the acquired sound signal and the vibration signal into an input data record; obtaining an input feature record from the input data record; feeding a pretrained machine-learning model with the input feature record to provide a transient event prediction output, wherein the pretrained model has been pretrained with a training dataset comprising input feature training records and event output training records.

## Description

### Technical field

The present disclosure relates a device and method comprising a machine learning approach for small damage detection by fusing audio and motion sensors signals.

### Background

With the advent of shared mobility, specifically car sharing services, a new problem has emerged: how do we verify who is accountable for a car's damage, if cars have different drivers on a daily basis? This very encompassing problem can be detangled into many other subproblems.

For station-based car sharing, where you rent a car and are obliged to deliver it at predefined location and time, there are damage inspections at the start and at the end of the trip. If new damages are identified at the end of the lease, the customer may be held accountable for the new damages. This is often a very subjective approach to damage accountability. As a customer, you may be charged for damages that already existed at the start of the trip and were not identified during initial car inspection. There may be instances where you will be charged with damages you were not responsible for. For example, if a damage occurs when the car is parked, and out of your sight. In this situation, since the damage occurred during the lease you will be charged with the consequences of that damage. From the perspective of the service provider, the subjectivity involved in the process of damage inspection and accountability presents itself as a challenge to increase customer satisfaction. If service providers are extremely strict about enforcing damage charges, they will have to deal with a probable increase in the number of complaints opened by its customers. Possibly reducing the costs of car repairs but hurting customer satisfaction levels. This conundrum forces service providers to adopt lenient policies with respect to damage claims, often taking responsibility for small damages away from their clients.

It is now evident that there is an opportunity for a more impartial and objective method of damage accountability, that by its nature, is not lenient either to the interests of the clients or service providers. Hence, being a win-win solution for both parties.

In free-floating car sharing, you pick a car up at one location and drop it off at any parking space within a predefined area. In this business model damage inspection is done by the clients at the start of the lease. Service providers will then use that information to charge customers if previously unreported damages are reported at the next leases' initial inspection. In this business model, the service providers must rely on the description their clients provide about the condition of the car. If these descriptions are more or less detailed, it is not hard to imagine that an unreported damage of a previous ride could only be reported way down the line by a more detailed client description. The service provider has no way of knowing if that damage occurred just before, in the previous lease, or in any of the earlier leases. As in the previous business model, there is an opportunity for an automated, unbiased system to attribute the responsibility of damage expenses to their legitimate authors.

The solutions available in the prior art, though being of utility for the problem of damage accountability, do not provide a complete solution. Image-based solutions by not providing real-time context for an event, cannot accurately determine whether a particular damage was the responsibility of the driver to whom the car was leased, or whether it was due to something beyond said driver's control. Motion and force-based solutions, though being able to provide context about the event that would help determine driver's damage accountability, are not the best solution for detecting very small damages, like scratches and small dents. Finally, sound-based only solutions, suffer from picking-up signals rich in information that is not useful for damage detection. Microphones, for example, pick up sounds related to damage detection, such as: the sound of scratches being made; car panels being compressed and dented; squealing tires etc; Nevertheless, they also pick up conversations, radio-sounds, sirens, and a variety of signals to which motion sensors are by definition not sensitive to. Sound-based sensors are therefore noisier, making the extraction of damage-related features less straightforward.

Document EP3667447A1 discloses a method for diagnosing a problematic noise source based on big data information including: measuring noise data of a powertrain of a vehicle by using a real-time noise measurement device, and converting the noise data into a signal that can be fed to a portable device for diagnosing the problematic noise source through an interface device; analyzing a noise through a deep learning algorithm on a converted signal, diagnosing the problematic noise source as a cause of the noise; displaying the cause of the noise by outputting a diagnostic result as the problematic noise source, and transmitting the diagnostic result to the portable device.

Document EP3667664A1 discloses a noise data artificial intelligence learning method for identifying the source of problematic noise may include a noise data pre-conditioning method for identifying the source of problematic noise including: selecting a unit frame for the problematic noise among noises sampled with time; dividing the unit frame into N segments; analyzing frequency characteristic for each segment of the N segments and extracting a frequency component of each segment by applying Log Mel Filter; and outputting a feature parameter as one representative frame by averaging information on the N segments, wherein an artificial intelligence learning by the feature parameter extracted according to a change in time by the noise data pre-conditioning method applies Bidirectional RNN.

These facts are disclosed in order to illustrate the technical problem addressed by the present disclosure.

### General Description

This disclosure proposes a machine learning approach to small damage detection by fusing audio and motion sensors signals.

The present disclosure enables the fusion of motion and airborne sound signals for small damage detection. Most of the prior work uses either sensor separately. Audio may be a richer source of information, as airborne signal propagation is better than structure-based signal propagation, on which motion sensors rely heavily. Nevertheless, for that exact reason, audio signals are more susceptible to noisy information that is irrelevant to small damage detection. The conjunction use of both sensors makes the system more accurate, reduces the number of false positives, and increases the true-positive rate, especially for low-energy damage events, such as scratches.

The present disclosure discloses a computer-implemented method for detecting at least a transient event, wherein the transient event is a damage and/or a contact event to a vehicle, said method comprising: acquiring a sound signal over a period of time by an audio sensor mounted on the vehicle to capture air-borne sound waves; acquiring at least a vibration signal over a period of time by a motion sensor mounted on the vehicle to capture vehicle vibration; detecting if said acquired sound signal is above a predetermined sound threshold and/or acquired vibration signal is above a predetermined vibration threshold; converting the acquired sound signal and the vibration signal into an input data record; obtaining an input feature record from the input data record; feeding a pretrained machine-learning model with the input feature record to provide a transient event prediction output, wherein the pretrained model has been pretrained with a training dataset comprising input feature training records and event output training records.

In an embodiment, the input feature record comprises vibration feature data and sound feature data; wherein the vibration feature data comprises transient features extracted from the input data record; wherein the sound feature data comprises transient event sound features extracted from the input data record.

In an embodiment, the method can comprise filtering the acquired sound signal with a plurality of frequency band-pass filters; outputting the filtered signals to the input data record when converting the acquired sound signal and the vibration signal into an input data record.

In an embodiment, the method can comprise extracting transient event sound features from the filtered signal from each of the band-pass filters.

In an embodiment, the method can comprise, comprising: filtering the acquired vibration signal with a low-pass filter; outputting the filtered signal to the input data record when converting the acquired sound signal and the vibration signal into an input data record.

In an embodiment, the audio sensor signal is a microphone.

In an embodiment, the motion sensor is a gyroscope and/or an accelerometer.

It is also discloses a device for detecting at least a transient event, wherein the transient event is a damage and/or a contact event of a vehicle, comprising: a motion sensor mounted on the vehicle for capturing a vehicle vibration; an audio sensor mounted on the vehicle for capturing airborne sound waves; an electronic data processor configured for providing a transient event prediction output, by carrying out the method of: acquiring a sound signal over a period of time acquired by an audio sensor mounted on the vehicle to capture air-bone sound waves; acquiring at least a vibration signal over a period of time by a motion sensor mounted on the vehicle to capture vehicle vibration; detecting if said acquired sound signal is above a predetermined sound threshold and/or acquired vibration signal is above a predetermined vibration threshold; converting the acquired sound signal and the acquired vibration signal into an input data record; obtaining an input feature record from the input data record; feeding a pretrained machine-learning model with the input feature record to provide a transient event prediction output, wherein the pretrained model has been pretrained with a training dataset comprising input feature training records and event output training records.

In an embodiment, the device further comprises a plurality of frequency band-pass filters for filtering an acquired sound signal to output the filtered signal to the input data record.

In an embodiment, the device further comprises at least one low-pass filter filters for filtering the acquired vibration signal to output the filtered signal to the input data record.

In an embodiment, the audio sensor signal is a microphone.

In an embodiment, the motion sensor is a gyroscope and/or an accelerometer.

It is also disclosed a non-transitory storage medium including program instructions for detecting at least a transient event, wherein the transient event is a damage and/or a contact event to a vehicle, for providing a transient event prediction output, the program instructions including instructions executable to carry out the method of any of the previous embodiments.

S It is also disclosed a system for obtaining a transient event prediction output, the system comprising an electronic data processor arranged to carry out the method of any of the previous embodiments.

### Brief Description of the Drawings

The following figures provide preferred embodiments for illustrating the description and should not be seen as limiting the scope of invention.
**Fig. 1** shows the performance of the XGBoost algorithm trained under different scenarios with the purpose of demonstrating the improvements brought by the present disclosure.
**Fig. 2** shows the median power spectrum of damage and background events, as well as the frequency bands most relevant for damage detection.
**Fig. 3** shows model performance improvement as more features are added to the machine learning model.
**Fig. 4** shows the 45 most relevant features for damage detection.
**Fig. 5** is a schematic representation of an embodiment of the system architecture where damage detection runs locally.
**Fig. 6** is a schematic representation of an embodiment of the system architecture where damage detection runs on remote server.
**Fig. 7** is a schematic representation of an embodiment of the damage detection system architecture.
**Fig. 8** is a schematic representation of an embodiment of the event Selector component of the damage detection system.
**Fig. 9** is a schematic representation of an embodiment of the Damage detection procedure in detail.

### Detailed Description

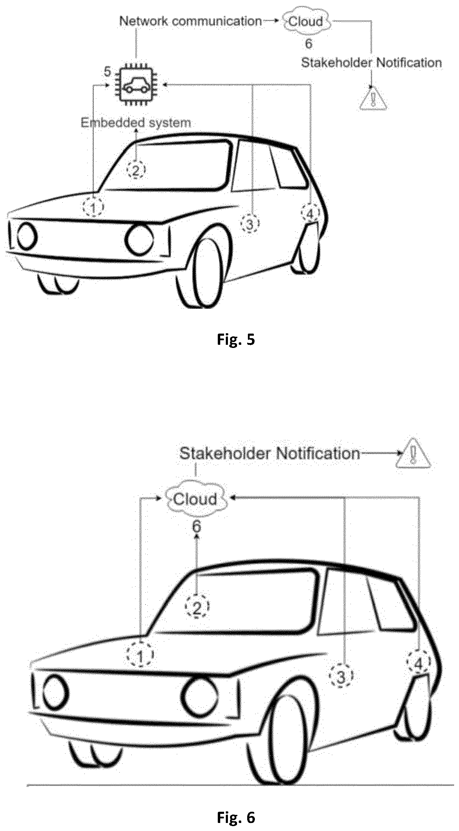

This disclosure proposes a device and method to small damage detection by fusing audio and motion sensors signals. The details will be described with reference to **Fig. 5** to **Fig. 9****.**

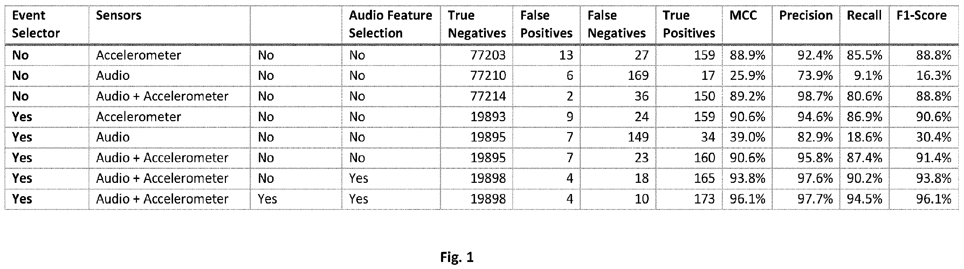

In an embodiment that considers a training set with 33.696 events, with 33.241 of the events with no damage, and the remaining 455 events with damage, a machine learning algorithm can be trained using only the motion sensor information. This provides a benchmark for any additional improvement on small damage detection that results from the addition of the audio information. The results of **Fig. 1****,** row 4 were drawn from evaluating the algorithm trained only with motion sensor information in a test set with 20.085 events, divided in 19.902 non-damage events, and 183 damage events. The performance of the trained model in this test set, measured by Matthew's correlation coefficient (MCC) is of 90.6% percent.

In an embodiment where we train a machine learning model with only audio **(****Fig. 1** **row 5**) information the performance is very poor, we can only achieve a MCC of 39%, with a model having a very low recall of 18.6%, i.e we could only detect 18.6% of damage events. This goes to show that even though audio is a very rich source of information it also introduces a lot of noise, which the algorithm has difficulty dealing with. When using motion sensors only, damage events, on average have higher energy than background events. This is still true for when we use audio, the difference is that in terms of energy, background events that are almost imperceptible on motion sensors, suddenly are measured with much more energy. A good example of this phenomena is music playing from a radio. When loud music is playing the accelerometer will only measure lower and highly attenuated frequencies, as structure borne sound waves will be dissipated as they travel through the car chassis. On the other hand, the microphone will pick up airborne sound waves, which will have much more energy, and have a richer frequency spectrum. When we use only audio, damage and background events are more alike each other, than they are when we use motion sensors alone.

In an embodiment, where we fuse the motion sensor information with audio, the model's performance remains at 90.6%(MCC) **(****Fig. 1** **row 6).** It shows that using sensor fusion to improve model performance on detecting damage events, is not as trivial as just concatenating common audio features and passing them through a machine learning model.

Through a process of feature selection and engineering it is found that some audio temporal features made the separation of damage and background events harder. The common trait between these features is that, in a way they all measure the energy of a signal: higher nominal values on these features translate to higher energy signals, and vice-versa. These features are: autocorrelation, total absolute energy, average energy per unit of time, area under the curve, number of negative and positive turning points. All these features correlate to the energy of a signal by indirectly measuring either amplitude or frequency. As we mentioned early, these features will direct the model to try to separate damage and background events by relying more on the energy of a signal, which works better if we are talking about motion sensor information, but not so well with audio.

If we remove those features, we can make sensor fusion valuable for the task in question. In **Fig. 1** **row 7** we achieve an MCC of 93.8%. We can observe that both type I (False Positives) and type II (False Negatives) errors were reduced, hence the performance enhancement.

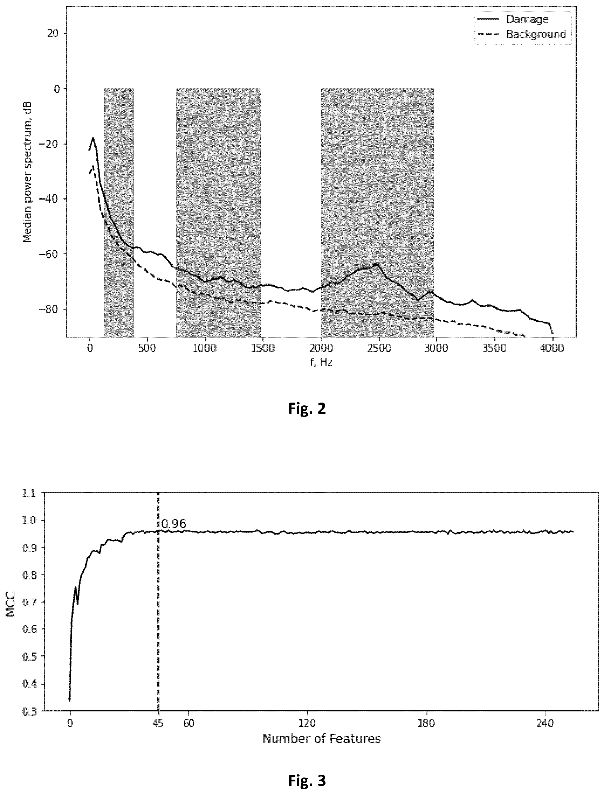

In **Fig. 2** the median spectral density of background and damage events is plotted using Welch's method. From this graph it is apparent that lower frequencies have more power both for background and damage events. However, this does not imply that they are the most important frequencies for better damage detection. We can also see that between 2000 Hz and 3000 Hz there is a significant discrepancy between the behavior of damage and background events. For damage events we can see an increase in the power density between 2000 and 2500 Hz followed by a decrease up until 3000 Hz. In contrast, for background events within the aforementioned frequency band we see a lower power density.

From the above, it follows that by isolating frequency bands prior to feature extraction it is possible to accentuate differences in the signal of damage and background events, which will result in separate features extracted from different frequency bands.

To that end, prior to feature extraction, resorting to Butterworth filters we segment the original audio signal into 3 frequency bands: 100- 400 Hz, 750-1500 Hz, and 2000-3000Hz, only then are audio features extracted.

With this approach it is possible to increase performance from 93.8 % to 96.1%. As seen in **Fig. 1** **row 8** this performance increase happened trough the reduction of type II errors. Which resulted in an increase in both the precision and the recall of the model.

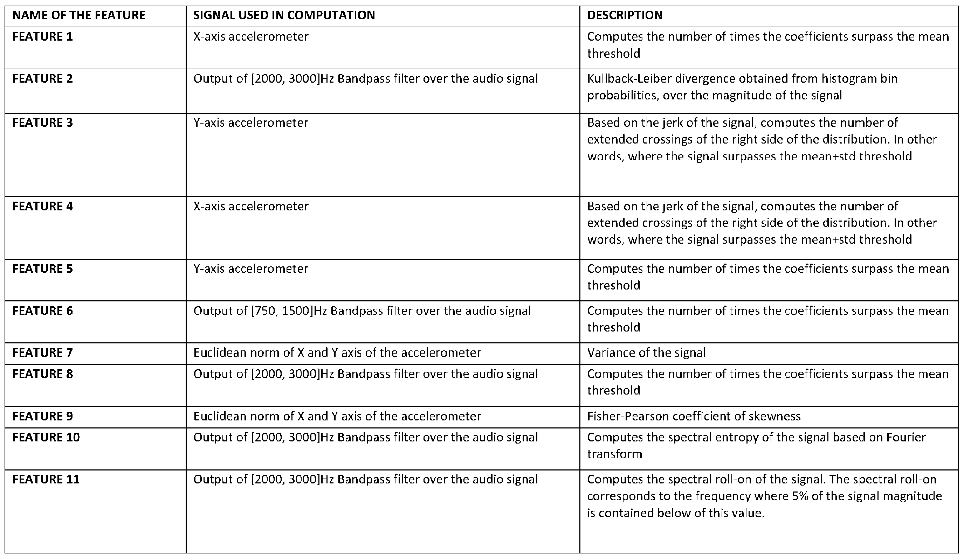

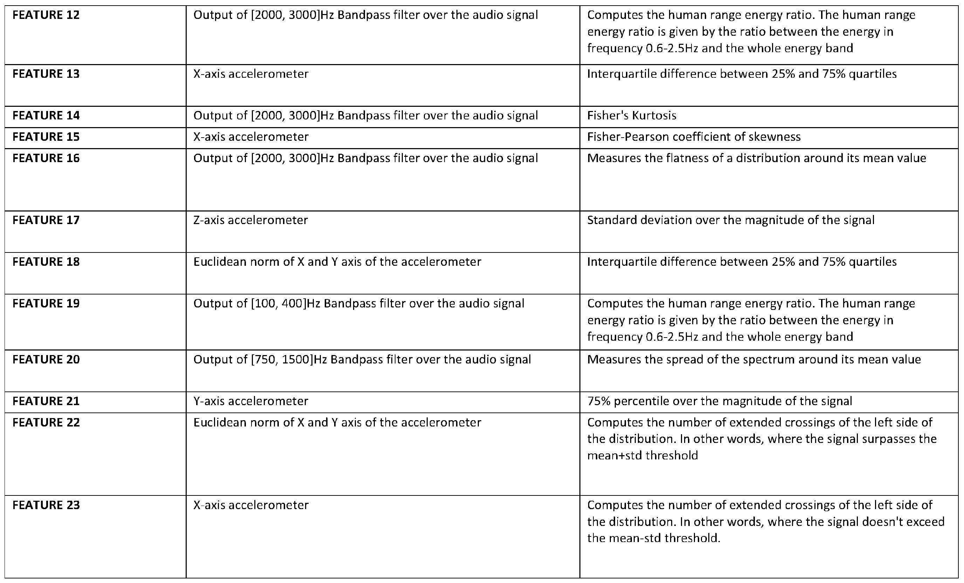

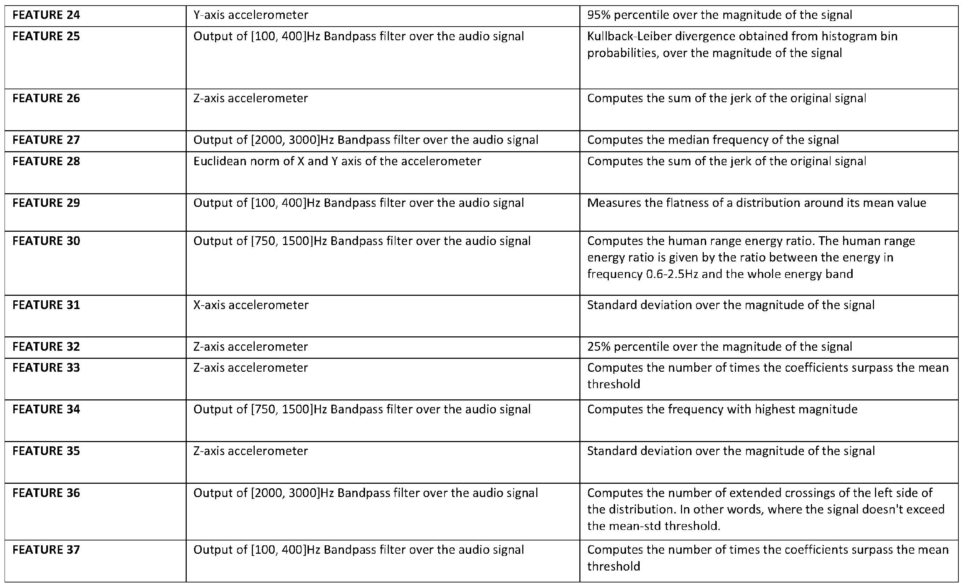

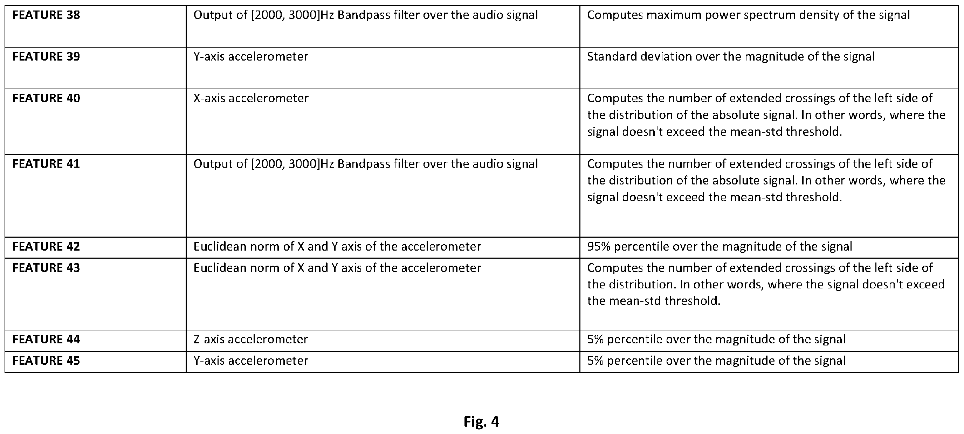

In an embodiment we trained a model with255 features, most of them commonly available in the literature and free to use software libraries, like the TSFEL python package. As expected, these features do not contribute to the performance of the model in the same way. It was observed the usual asymptotic behavior, characterized by a rapid decrease in performance contribution as more features are added (**Fig. 3**). For a matter of reproducibility, we publish the 45 most relevant features for damage detection, which we disclose in **Fig. 4****.**

In an embodiment, we introduced a screening procedure using thresholding techniques over the motion sensor signal. Instead of using a sliding window and running the damage detection process **8** continuously we run a sliding window over the motion sensor signal and the event selection process continuously. If the event selection process finds an event that is likely to be a damage event, then, and only then, do we run the damage detection process **8**. This reduces the computation burden on the CPU of the device, and at the same time marginally increases performance of the models, when compared to when they infer on signals that did not go through the event screening process (see **Fig. 1**). The present disclosure proposes a machine learning approach to small damage detection by fusing audio and motion sensors signals. The motion sensors could be, for example, gyroscopes and accelerometers, and the audio signals could be captured by any type of microphone. These signals can be processed in real time on an embedded system, **5,** or sent over any communication network to a server, **6,** where the pre-processing steps and damage detection procedure takes place. In an embedded system, all signal pre-processing steps, and damage detection run locally on a device, **5,** that can be installed inside or outside the vehicle. When a damage is detected, a report with the details of the event is sent to one or more interested stakeholders, such as vehicle owners, drivers, insurance providers, car rental and sharing platforms, etc. This report includes information about the presence of damage, the timestamp of that damage and GPS location, preferably, but not excluding other types of relevant information.

In **Fig. 5** we can observe two embodiments of the proposed system. In **Fig. 5** we have a cluster of motion and audio sensors scattered throughout the exterior or interior of the car **1-4**. Instead of a cluster of sensors, a solution with only one sensor of each type could be employed. A cluster of sensors would be most useful in cases where the location of damage is important. In this first embodiment the sensors communicate with an embedded system **5**. This communication may occur through any type of wireless and/or wired system. The embedded system could be any form of computer device with memory, and one or more central processing units.

Alternatively, an application specific integrated circuit can be used (ASIC). The embedded system, **5**, will be responsible for pre-processing the signals from the sensors, running the damage detection procedure, and sending information to a cloud server/s.

The cloud server/s, **6**, is responsible for sending notifications to relevant stakeholders and can also serve web applications, where reports about specific vehicles and drivers can be retrieved.

In the first embodiment the damage detection system runs locally on the embedded device, **5**. Hence, communication with cloud servers happens only when a damage event is detected. This is important in cases where wireless communication entails considerable costs. As a result, having the processing power available locally is less expensive than running all the processing tasks on a remote server.

On the embodiment of **Fig. 6** sensors communicate directly with the cloud server/s, **6**, responsible for running both the damage detection system, notifying stakeholders and serving web applications. In this embodiment communication does not need to happen directly between servers and sensors. There may be intermediate special purpose computers that listen to the signals of the different sensors, batch them, and send them through a wireless communication system. It is useful in cases where compute resource efficiency is more important than data transmission costs. Therefore, replicating computing power at every car is not as attractive.

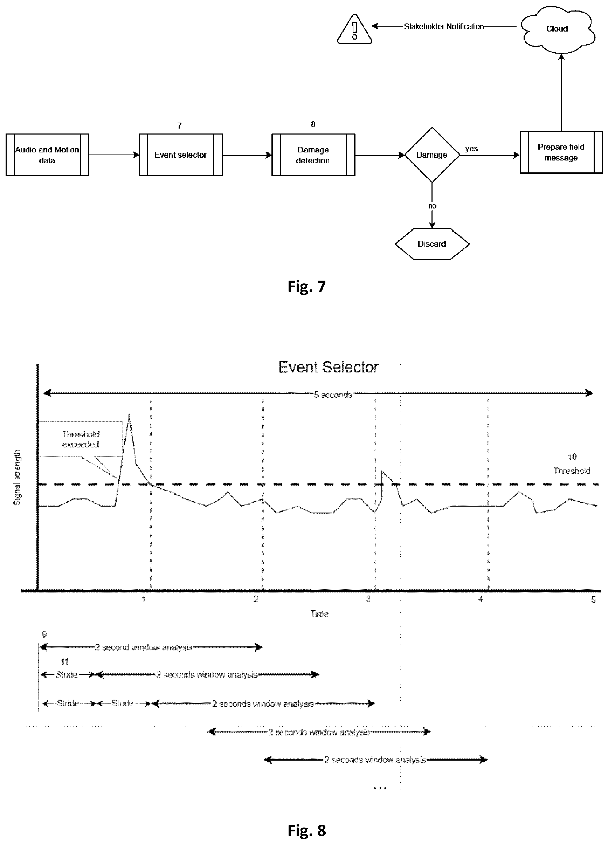

In **Fig. 7** we can see that **7**, **8** are processes that are run either locally on an embedded system, **5,** or in a cloud server, **6,** and that lead up to the damage detection process.

**Fig. 8** shows a diagram of the logic implemented in the event selector process, **7**. This process is entirely optional. Its existence is contingent on the need to screen out parts of the signal with low probability of damage. Using a very simple computational process, we can filter out significant parts of the signal and thus reduce the number of windows effectively being processed by the damage detection procedure, 8. This approach is geared towards product applications where the cost of the embedded device and data transmission must be as low as possible, even if it comes at the price of a less accurate damage detection system. In the event selector, **7**, we use the audio, motion, or a combination of both signal streams, stride them into windows of size n seconds and stride s, **11**, and determine whether there are windows where the amplitude of the signals exceeds predefined thresholds, **10**. These thresholds are determined by experimentation. For the motion sensors, we can simulate the smallest impact on the vehicle that we want to pass through the damage detection procedure. Then, we can use the maximum amplitude of that proxy signal to define the threshold for the motion sensor. The same idea can be extrapolated for the audio windows. Customer feedback can also be incorporated into the screening process. After all, they are the ones who define what constitutes a significantly enough damage to be billed to a customer. If thresholds are exceeded, audio and motion windows will be sent either to the embedded device, **5**, or to the cloud, **6**, for further processing, where the damage detection procedure will run, **8**.

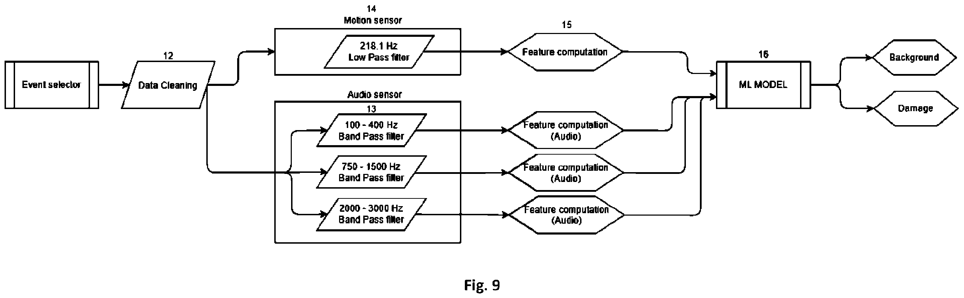

In **Fig. 9** it is disclosed all the sequential steps of the proposed damage detection procedure. The first step is data cleaning. The goal of this step is to remove data artifacts related to motion and audio sensor limitations. These artifacts correspond to signal distortions such as clipping and harmonic distortion

. To repair the signal, interpolation[27] and extrapolation[28] methods could be used. Although perfect restoration is not possible, this process attempts to reduce the noise caused by the distortion artifacts and recover information that would otherwise be lost. This process is only relevant when input data suffers from information loss due to hardware limitations, otherwise it can be skipped.

The next preprocessing step consists of signal filtering **14**. This filtering process serves two purposes: the first to remove noisy parts of the signal; and second, to isolate frequency bands that are relevant for damage detection. Isolating frequency bands may provide information that would have been invisible to the machine learning model **16**, if features had been extracted only from the original signal. Let us take as an example a feature of the frequency domain such as the spectral roll-off. The spectral roll-off computes the frequency below which 90% of total energy of the spectrum is contained. If the original signal is used, most of the energy of the audio signal in a small damage event still comes from engine and road noise, lower frequencies that are of little interest for damage detection. This may conceal the fact that for certain small damages, higher frequencies, albeit of low energy, are characteristic of a particular type of damage event. Computing spectral roll-off feature across isolated frequency bands extracts more information from the same original signal. These filters can be found empirically or attained by a machine learning method. The frequency bands of **Fig. 9** were found to be of utility for the small damage detection task but should not be considered exclusive - the use of other bands or the addition of different ones may be just as useful. The filtered signals are fed to a feature extractor **15,** that computes common time and frequency domain features[29], for both types of signals. Audio and motion signals extracted features do not have to be the same, they can be entirely different or overlap with each other. Lastly, these features are concatenated and consumed by a machine learning model, **16,** that outputs the probability of damage for a particular window of signals. The preprocessing steps that lead to model ingestion are compatible with any machine learning model, though they are especially suited for decision-tree based algorithms like XGBoost[30] or LightGBM[31].

One of the most important signs of potential patent infringement would be claims related to the fusion of sound and motion sensors. If a competitor claims the use of microphones in conjunction with accelerometers, this would be an already significant overlap between ours and their invention.

Regarding our damage detection procedure, methods that compute features from filtered original signals, i.e., isolate certain frequency bands prior to feature extraction and then concatenate all the features prior to model ingestion, could be, in our point of view, violating the proposed invention. Some steps of the damage detection procedure are usual enough in any machine learning pipeline, that it would be imprudent to claim them as a proprietary part of the invention. Nevertheless, isolating frequency bands and do feature extraction for each band, though straight-forward, is something that we didn't find in published literature. What is usually found is the filtering done with the intention of removing unwanted noise. In the case of the proposed method, filtering is performed not only with the intention of removing noise, but also with the goal of revealing information that would not otherwise be present in the computed features if they had been extracted from the original signal. Hence, from this point of view, it makes sense to filter the original signal with different bandpass filters, whose bands can even overlap. On the other hand, if the filtering was done only with the intention of removing noise, the use of two different overlapping filters would not make sense.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above-described embodiments are combinable. The following claims further set out particular embodiments of the disclosure.

### References

[1] "AI Car Damage Detection." https://inspektlabs.com/damagedetection/ (accessed Apr. 01, 2022).
[2] Altoros, "Altoros, Car Damage Recognition." https://www.altoros.com/solutions/car-damage-recognition (accessed Apr. 01, 2022).
[3] Deloitte Luxembourg, "How our new Al car damage recognition application may impact the insurance industry." https://www2.deloitte.com/lu/en/pages/innovation/articles/deloitte-ai-car-damage-recognition.html (accessed Apr. 01, 2022).
[4] "AI for Vehicle Inspection & Damage Detection," DeGould. https://degould.com/powered-by-ai/ (accessed Apr. 01, 2022).
[5] I. Kar, M. C. Salman, A. Vashishta, and V. D. Pandey, "Explainable Artificial Intelligence (ai) Based Image Analytic, Automatic Damage Detection and Estimation System," US2021182713A1, Jun. 17, 2021
[6] MotionsCloud. https://motionscloud.com/products/ (accessed Apr. 04, 2022).
[7] J. S. Snyder, D. Ferguson, and G. Irey, "Automatic crash detection," US9767625B1, Sep. 19, 2017 Accessed: Apr. 04, 2022. [Online]. Available: https://patents.google.com/patent/US9767625B1/en
[8] T. Dobra and J. Bentham, "Low-impact crash detection system," EP2854112A1, Apr. 01, 2015 Accessed: Apr. 12, 2022. [Online]. Available: https://patents.google.com/patent/EP2854112A1/en?oq=LOW+IMPACT+C RASH+DETECTION+FOR+A+VEHICLE
[9] T. Gioutsos, C. White, B. J. Zahn, D. N. Tabar, and D. C. Milo, "Crash detection system," WO1999020491A1, Apr. 29, 1999 Accessed: Apr. 04, 2022. [Online]. Available: https://patents.google.com/patent/WO1999020491A1/en
[10] K. Cho, S. B. Choi, and H. Lee, "Design of an Airbag Deployment Algorithm Based on Precrash Information," IEEE Trans. Veh. Technol., vol. 60, no. 4, pp. 1438-1452, May 2011, doi: 10.1109/TVT.2011.2126614.
[11] K. Cho, Seibum. B. Choi, S. Wee, and K. Shin, "Design of an Airbag Deployment Algorithm Using a Radar Sensor*," IFAC Proc. Vol., vol. 43, no. 7, pp. 755-760, Jul. 2010, doi: 10.3182/20100712-3-DE-2013.00016.
[12] E. J. Gillis, T. Gioutsos, and D. E. Palmer, "Vehicle impact detection system," US5445412A, Aug. 29, 1995 Accessed: Apr. 12, 2022. [Online]. Available: https://patents.google.com/patent/US5445412/en?oq=LOW+IMPACT+CRA SH+DETECTION+FOR+A+VEHICLE
[13] "Vehicle side impact crash detection for deployment of curtain and side airbags," Apr. 03, 2007 Accessed: Apr. 12, 2022. [Online]. Available: https://patents.google.com/patent/U S7484756 B2/en
[14] K. Bauer, S. Hesse, H. Kettern-Kohler, and U. Rick, "Method for controlling a belt pretensioner and safety arrangement comprising a belt pretensioner," US8335614B2, Dec. 18, 2012Accessed: Apr. 04, 2022. [Online]. Available: https://patents.google.com/patent/US8335614/en
[15] "Noise Vibration and Harshness - an overview | ScienceDirect Topics." https://www.sciencedirect.com/topics/engineering/noisevibration-and-harshness (accessed Apr. 11, 2022).
[16] "Noise Vibration Harshness (NVH) | What we do | FEV - FEV Group." https://www.fev.com/en/what-we-do/powertraindevelopment-electrification/nvh-noise-vibration-harshness.html (accessed Apr. 11, 2022).
[17] R. F. Coleman, "Comparison of microphone and neck-mounted accelerometer monitoring of the performing voice," J. Voice, vol. 2, no. 3, pp. 200-205, Jan. 1988, doi: 10.1016/S0892- 1997(88)80077-8.
[18] S. A. Anand, C. Wang, J. Liu, N. Saxena, and Y. Chen, "Motion Sensor-based Privacy Attack on Smartphones," ArXiv190705972 Cs, Oct. 2020, Accessed: Apr. 04, 2022. [Online]. Available: http://arxiv.org/abs/1907.05972
[19] M. Sammarco and M. Detyniecki, "Crashzam: Sound-based Car Crash Detection," Mar. 2018. doi: 10.5220/0006629200270035.
[20] D. Damjanovic, "Piezoelectricity," in Encyclopedia of Condensed Matter Physics, F. Bassani, G. L. Liedl, and P. Wyder, Eds. Oxford: Elsevier, 2005, pp. 300-309. doi: 10.1016/B0-12- 369401-9/00433-2.
[21] H. Baumgärtel, A. Kneifel, S. Gontscharov, and K. Krieger, "Investigations and Comparison of Noise Signals to Useful Signals for the Detection of Dents in Vehicle Bodies by Sound Emission Analysis," 2014, doi: 10.1016/J.PROTCY.2014.09.044.
[22] S. Gontscharov, K. Baumgaertel, A. Kneifel, and K.-L. Krieger, "Algorithm Development for Minor Damage Identification in Vehicle Bodies Using Adaptive Sensor Data Processing," Procedia Technol., vol. 15, Dec. 2014, doi: 10.1016/j.protcy.2014.09.019.
[23] A. KNEIFEL, K. H. Baumgärtel, and K.-L. Krieger, "Device and method for detecting at least one structure-borne sound signal," DE102014001258A1, Jul. 30, 2015 Accessed: Apr. 11, 2022. [Online]. Available: https://patents.google.com/patent/DE102014001258A1/en
[24] T. Niemann and K. H. Baumgärtel, "A sensor device and method for detecting at least one touch event on a vehicle," DE102014014389A1, Apr. 07, 2016 Accessed: Apr. 11, 2022. [Online]. Available: https://patents.google.com/patent/DE102014014389A1/en
[25] S. Amares, E. Sujatmika, T. W. Hong, R. Durairaj, and H. S. H. B. Hamid, "A Review: Characteristics of Noise Absorption Material," J. Phys. Conf. Ser., vol. 908, p. 012005, Oct. 2017, doi: 10.1088/1742-6596/908/1/012005.
[26] A. Kneifel, S. Gontscharov, and K. Baumgaertel, "Real time minor damage identification system and its validation in a fleet test," 2015, pp. 775-786. doi: 10.1007/978-3-658-08844-6_51.
[27] J. F. Steffensen, Interpolation. 2006. Accessed: Apr. 07, 2022. [Online]. Available:http://www.freading.com/ebooks/details/r:download/ZnJIYWQ6OTc4MDQ4 NjE1 NDgzMTpl
[28] A. Sidi, Practical Extrapolation Methods: Theory and Applications. Cambridge University Press, 2003.
[29] M. Barandas et al., "TSFEL: Time Series Feature Extraction Library," SoftwareX, vol. 11, p. 100456, Jan. 2020, doi: 10.1016/j.softx.2020.100456.
[30] T. Chen and C. Guestrin, "XGBoost: A Scalable Tree Boosting System," Proc. 22nd ACM SIGKDD Int. Conf. Knowl. Discov. Data Min., pp. 785-794, Aug. 2016, doi: 10.1145/2939672.2939785.
[31] G. Ke et al., "LightGBM: A Highly Efficient Gradient Boosting Decision Tree," in Advances in Neural Information Processing Systems, 2017, vol. 30. Accessed: Apr. 07, 2022. [Online]. Available: https://papers.nips.cc/paper/2017/hash/6449f44a102fde848669bdd9e b6b76fa-Abstract.html
[32] "Welch Method - an overview | Science Direct Topics." https://www.sciencedirect.com/topics/mathematics/welch-method (accessed Oct. 04, 2022).
[33] "Butterworth Filter - an overview | ScienceDirect Topics." https://www.sciencedirect.com/topics/computer-science/butterworth-filter (accessed Oct. 04, 2022).

## Claims

1. Computer-implemented method for detecting at least a transient event, wherein the transient event is a damage and/or a contact event to a vehicle, said method comprising:
acquiring a sound signal over a period of time by an audio sensor mounted on the vehicle to capture air-borne sound waves;
acquiring at least a vibration signal over a period of time by a motion sensor mounted on the vehicle to capture vehicle vibration;
detecting if said acquired sound signal is above a predetermined sound threshold and/or acquired vibration signal is above a predetermined vibration threshold;
converting the acquired sound signal and the vibration signal into an input data record;
obtaining an input feature record from the input data record;
feeding a pretrained machine-learning model with the input feature record to provide a transient event prediction output, wherein the pretrained model has been pretrained with a training dataset comprising input feature training records and event output training records.

2. Computer-implemented method according to claim 1, wherein the input feature record comprises vibration feature data and sound feature data;
wherein the vibration feature data comprises transient features extracted from the input data record;
wherein the sound feature data comprises transient event sound features extracted from the input data record.

3. Computer-implemented method according to any of the previous claims, comprising:
filtering the acquired sound signal with a plurality of frequency band-pass filters; outputting the filtered signals to the input data record when converting the acquired sound signal and the vibration signal into an input data record.

4. Computer-implemented method according to the previous claim, comprising extracting transient event sound features from the filtered signal from each of the band-pass filters.

5. Computer-implemented method according to any of the previous claims, comprising:
filtering the acquired vibration signal with a low-pass filter;
outputting the filtered signal to the input data record when converting the acquired sound signal and the vibration signal into an input data record.

6. Computer-implemented method according to any of the previous claims, wherein the audio sensor signal is a microphone.

7. Computer-implemented method according to any of the previous claims, wherein the motion sensor is a gyroscope and/or an accelerometer.

8. Device for detecting at least a transient event, wherein the transient event is a damage and/or a contact event of a vehicle, comprising:
a motion sensor mounted on the vehicle for capturing a vehicle vibration;
an audio sensor mounted on the vehicle for capturing airborne sound waves;
an electronic data processor configured for providing a transient event prediction output, by carrying out the method of:
acquiring a sound signal over a period of time acquired by an audio sensor mounted on the vehicle to capture air-bone sound waves;
acquiring at least a vibration signal over a period of time by a motion sensor mounted on the vehicle to capture vehicle vibration;
detecting if said acquired sound signal is above a predetermined sound threshold and/or acquired vibration signal is above a predetermined vibration threshold;
converting the acquired sound signal and the acquired vibration signal into an input data record;
obtaining an input feature record from the input data record;
feeding a pretrained machine-learning model with the input feature record to provide a transient event prediction output, wherein the pretrained model has been pretrained with a training dataset comprising input feature training records and event output training records.

9. Device according to the previous claim further comprising a plurality of frequency band-pass filters for filtering an acquired sound signal to output the filtered signal to the input data record.

10. Device according to any of the claims 8 - 9 further comprising at least one low-pass filter filters for filtering the acquired vibration signal to output the filtered signal to the input data record.

11. Device according to any of the claims 8-10 wherein the audio sensor signal is a microphone.

12. Device according to any of the claims 8-11 wherein the motion sensor is a gyroscope and/or an accelerometer.

13. Non-transitory storage medium including program instructions for detecting at least a transient event, wherein the transient event is a damage and/or a contact event to a vehicle, for providing a transient event prediction output, the program instructions including instructions executable to carry out the method of any of the claims 1-7.

14. System for obtaining a transient event prediction output, the system comprising an electronic data processor arranged to carry out the method of any of the claims 1-7.
